# EUROPEAN PATENT APPLICATION

(11) **EP 4 632 845 A1**
(43) Date of publication of application: **15.10.2025**
(21) Application number: 23769937.6
(22) Date of filing: 21.03.2023
(51) Int. Cl.: H01M 4/62, H01M 4/505

(54) **TERNARY BLENDED POSITIVE ELECTRODE MATERIAL, PREPARATION METHOD THEREFOR AND BATTERY**

(30) Priority: 21.12.2022 CN 202211652221
(71) Applicant: Eve Power Co., Ltd., Jingmen, Hubei 448000 (CN)
(72) Inventor: WU, Tingting, Jingmen, Hubei 448000 (CN); ZHANG, Lin, Jingmen, Hubei 448000 (CN); YUAN, Dingding, Jingmen, Hubei 448000 (CN)
(74) Representative: Berggren Oy
(86) International application number: PCT/CN2023/082832
(87) International publication number: WO 2023/174435

(57) **Abstract**

A ternary blended positive electrode material and a preparation method thereof and a battery are provided. The preparation method includes mixing a ternary material, a lithium manganese iron phosphate material and a coating material, and performing high-energy ball milling on the obtained mixture to obtain the ternary blended positive electrode material. The coating material includes a polyphosphazene intermediate. Through high-energy ball milling, the ternary material and the lithium manganese iron phosphate material are uniformly mixed together, and due to the high ball milling efficiency, the ball-milled particles have a finer size and the mixing is more uniform, thus improving the compactness of the ternary material and the lithium manganese iron phosphate material and the electrical conductivity of the material. Meanwhile, by adopting the polyphosphazene intermediate as the coating material, the obtained ternary blended positive electrode material has a ultra-thin coating layer that blocks the direct contact between an electrolyte and the positive electrode material in the circulation process, thereby providing stability.

## Description

This application claims priority to Chinese Patent Application No. 202211652221.8 filed on December 21, 2022, the entire contents of which are incorporated herein by reference.

### TECHNICAL FIELD

The present disclosure belongs to the field of preparation of ternary positive electrode materials, and in particular, to a preparation method of ternary blended positive electrode materials, for example, to a ternary blended positive electrode material and a preparation method thereof and a battery.

### BACKGROUND

Advanced energy storage materials represent the future development trend. Lithium-ion batteries exhibit outstanding energy density, long cycle life, and lightweight properties, meeting our growing energy demands. Research on lithium batteries is currently a hot topic in physics, chemistry, materials science, and other disciplines. Currently, the most commonly used positive electrode materials for lithium batteries in the market include lithium cobaltate, ternary material, iron phosphate, and lithium manganese iron phosphate.

Lithium manganese iron phosphate is a novel phosphate-based positive electrode material that is derived from lithium iron phosphate by doping with a certain proportion of manganese. Lithium manganese iron phosphate retains the stable olivine-type structure of lithium iron phosphate, ensuring enhanced structural stability during charge-discharge cycles. Even when all lithium ions are extracted during charging, the structure remains intact, offering superior safety and lower cost compared to other materials. Pure lithium manganese iron phosphate, when compared to ternary materials, has the advantages of lower cost and higher safety, but its main limitations lie in low conductivity and lower energy density. To balance performance and safety, the combination of ternary materials with lithium manganese iron phosphate can integrate the strengths of both materials. This composite approach compensates for their respective weaknesses, improving energy density and delivering more comprehensive battery performance.

CN 107546379A discloses a lithium manganese iron phosphate-ternary material composite positive electrode material and a preparation method thereof. The nanoparticles of the lithium manganese iron phosphate are fixed on the surface of the ternary material by mechanical fusion to form a compact porous coating layer, thereby solving a problem that the ternary material and the lithium manganate iron phosphate positive electrode material are easily segregated due to different densities when a mixed slurry of the ternary material and the lithium manganate iron phosphate positive electrode material needs to be obtained at a mixing stage during use of the ternary material and the lithium manganate phosphate positive electrode material. By tightly covering the surface of the ternary material with lithium manganese iron phosphate, a stable core-shell structure is obtained, so that the surface of the ternary material can be protected by the lithium manganese iron phosphate, preventing the ternary material from deteriorating due to absorption of water in the environment, direct contact between the ternary material and an electrolyte is reduced in a battery, and stability and circularity of the ternary material are improved.

CN 111864198A provides a method of preparing a ternary material-lithium manganese iron phosphate composite positive electrode material. The method includes the following steps: at Sl, PVDF and NMP are mixed and dispersed by a nano-disperser at a dispersion speed of 1100 rpm to 1300 rpm for 5.5 h to 6.5 h at a temperature of 30°C to 40°C to obtain a material A; at S2, SP is added and dispersed by a nano-disperser at a dispersion speed of 1900 rpm to 2100 rpm for 1 h to 2 h at a temperature of 20°C to 30°C to obtain a material B; at S3, the material A and the material B are mixed, and CNT is added into the mixture and dispersed by a nano-disperser at a dispersion speed of 1900 rpm to 2100 rpm for 1.5 h to 2.5 h at a temperature of 20°C to 30°C to obtain a material C; at S4, lithium nickel cobalt manganate and lithium manganese iron phosphate are mixed and equally divided in three portions, and sequentially added to the material C in 3 times, and after each addition, the mixed system is dispersed by a nano-disperser at a dispersion speed of 1400 rpm to 1600 rpm for 5 min to 15 min at a temperature of 20°C to 30°C to obtain a material D; and at S5, the material D is dispersed by a nano-disperser at a dispersion speed of 1700 rpm to 1900 rpm for 2 h to 3 h at a temperature of 20°C to 30°C under a vacuum degree of more than 0.085 MPa to obtain a material E, which has a good safety.

In the above technical solutions, lithium manganese iron phosphate and ternary materials are composited, but insufficient bonding between the two materials may affect conductivity, and the multi-step preparation process increases manufacturing costs.

### SUMMARY

The following is an overview of the subject matters described in the present disclosure, which is not intended to limit the scope of the present disclosure.

The present disclosure provides a ternary blended positive electrode material and a preparation method thereof and a battery. A ternary material and a lithium manganese iron phosphate material are uniformly mixed together by high-energy ball milling, so that the ball milled particles have a finer size, and the mixing is more uniform due to high ball milling efficiency, thereby improving the compactness of the ternary material and the lithium manganese iron phosphate material and improving the electrical conductivity of the material. Meanwhile, a polyphosphazene intermediate is used as a coating material to form the ternary blended positive electrode material with an ultra-thin coating layer that blocks the direct contact between the electrolyte and the positive electrode material during the circulation process, thereby providing stability.

The present disclosure adopts the following technical solutions.

In a first aspect, embodiments of the present disclosure provide a method of preparing a ternary blended positive electrode material, and the method includes the following step.

A ternary material, a lithium manganese iron phosphate material, and a coating material are mixed and then subjected to high-energy ball milling to obtain the ternary blended positive electrode material.

The coating material includes a polyphosphazene intermediate.

In the embodiments of the present disclosure, the ternary material and the lithium manganese iron phosphate material are uniformly mixed together by high-energy ball milling, so that the ball milled particles have a finer size, and the mixing is more uniform due to high ball milling efficiency, thereby improving the compactness of the ternary material and the lithium manganese iron phosphate material and improving the electrical conductivity of the material. Meanwhile, the polyphosphazene intermediate is used as the coating material to form the ternary blended positive electrode material with an ultra-thin coating layer that blocks direct contact between the electrolyte and the positive electrode material during circulation, thereby providing stability.

In some embodiments, the ternary material has a median particle size of 8 µm to 20 µ µm, for example, 8 µm, 10 µm, 12 µm, 15 µm, 18 µm, or 20 µm, which is not limited to the listed numerical values, and other numerical values not listed within the numerical range are applicable.

In some embodiments, the ternary material has a particle size distribution of 0.6 to 1.2, for example, 0.6, 0.8, 1, 1.1, or 1.2, which is not limited to the listed values, and other values not listed within the numerical range are applicable.

The particle size distribution is represented by an equation of Dspan= (D90-D10)/D50.

In some embodiments, the ternary material includes at least one of or a combination of at least two of NCM523 (LiNi_{0.5}Co_{0.2}Mn_{0.3}O₂), NCM622 (LiNi_{0.6}Co_{0.2}Mn_{0.2}O₂), NCM712 (LiNi_{0.7}Co_{0.1}Mn_{0.2}O₂), NCM811(LiNi_{0.8}Co_{0.1}Mn_{0.1}O₂), or NCM90505 (LiNi_{0.9}Co_{0.05}Mn_{0.05}O₂). Typical but not limiting combinations include a combination of NCM523 and NCM622, a combination of NCM622 and NCM712, a combination of NCM712 and NCM811, a combination of NCM811 and NCM90505, a combination of NCM523, NCM622 and NCM712, a combination of NCM622, NCM712 and NCM811, a combination of NCM712, NCM811 and NCM90505, a combination of NCM523, NCM622, NCM712, and NCM811, a combination of NCM622, NCM712, NCM811, and NCM90505, or a combination of NCM523, NCM622, NCM712, NCM811, and NCM90505.

In some embodiments, the lithium manganese iron phosphate material has a median particle size of 1 µm to 2 µm, for example, 1 µm, 1.2 µm, 1.4 µm, 1.6 µm, 1.8 µm, or 2 µm, which is not limited to the listed numerical values, and other numerical values not listed within the numerical range are applicable.

In some embodiments, the lithium manganese iron phosphate material has a particle size distribution of 0.2 to 0.4, for example, 0.2, 0.25, 0.3, 0.35, or 0.4, which is not limited to the listed numerical values, and other numerical values not listed within the numerical range herein are applicable.

In some embodiments, the polyphosphazene intermediate includes a phosphoryl chloride trimer (P₃N₃Cl₆, PNCL).

The PNCL has a melting point of about 115°C and a boiling point of 127°C. Under the action of high-energy ball milling, the PNCL is easily in a molten state and can uniformly coat the surfaces of the ternary material and the lithium manganese iron phosphate. After the ball milling and cooling, a stable and uniform PNCL super-thin coating layer is formed. The high energy of the high energy ball milling allows the PNCL to uniformly coat the surfaces of the base material (a combination of the ternary material and lithium manganese iron phosphate). The PNCL coating layer blocks the direct contact between the electrolyte and the positive electrode material during the circulation process and reduces the occurrence of side reactions, thereby improving the cycling stability of the material.

The PNCL coating layer, in addition of blocking the side reactions at the interface between the positive electrode and the electrolyte during the circulation process, can enhance the structural stability of the ternary blended positive electrode material, enhance the diffusion of lithium ions at the interface between the electrode and the electrolyte, prevent the ternary blended positive electrode material particles from being pulverized during the circulation process, and prevent HF generated by decomposition in the electrolyte from corroding the material, thereby improving the cycling performance of the material.

In some embodiments, the mass ratio of the ternary material to the lithium manganese iron phosphate is (1.5 to 4.5): (8.5 to 5.5), for example, 1.5: 8.5, 2: 8, 3: 7, 4: 6, or 4.5: 5.5, which is not limited to the numerical values listed, and other numerical values not listed within the numerical range are applicable.

In some embodiments, the mass ratio of the coating material is 0.7 to 1.0 wt% of the total mass of the ternary material and lithium manganese iron phosphate. For example, the mass ratio may be 0.7 wt%, 0.8 wt%, 0.9 wt%, 0.95 wt%, or 1.0 wt%, which is not limited to the numerical values listed, and other numerical values not listed within the numerical range are applicable.

In some embodiments, the high energy ball milling is performed for 1 to 2 h, for example, 1 h, 1.2 h, 1.4 h, 1.6 h, 1.8 h, or 2 h, which is not limited to the listed numerical values, and other numerical values not listed within the numerical range are applicable.

In some embodiments, the high energy ball milling is performed at a ball-to-material ratio of (8 to 12): 1, for example, 8: 1, 9: 1, 10: 1, 11: 1, or 12: 1, which is not limited to the numerical values listed, and other numerical values not listed within the numerical range are applicable.

In some embodiments, the high energy ball milling is performed at a revolution speed of 800 to 1200 r/min, for example, 800 r/min, 900 r/min, 1000 r/min, 1100 r/min, or 1200 r/min, which is not limited to the numerical values listed, and other numerical values not listed within the numerical range are applicable.

In some embodiments, the high energy ball milling is performed at a rotation speed of 2200 r/min to 2500 r/min, for example, 2200 r/min, 2250 r/min, 2300 r/min, 2400 r/min, or 2500 r/min, which is not limited to the numerical values listed, and other numerical values not listed within the numerical range are applicable.

In some embodiments, a method of preparing the ternary material includes the following step.

A nickel cobalt manganese hydroxide precursor, a lithium source and an additive are mixed and sintered at a high temperature to obtain the ternary material.

In some embodiments, the molar ratio of Ni: Co: Mn in the nickel cobalt manganese hydroxide precursor is 5: 2: 3 to 9.5: 0.25: 0.25, for example, 5: 2: 3, 6: 2: 2, 7: 1: 2, 8: 1: 1, or 9.5: 0.25: 0.25, which is not limited to the numerical values listed, and the numerical values not listed in the numerical range are applicable.

In some embodiments, the lithium source includes any one of or a combination of at least two of lithium hydroxide, lithium carbonate, lithium nitrate, or lithium acetate. Typical but non-limiting combinations include a combination of lithium hydroxide and lithium carbonate, a combination of lithium carbonate and lithium nitrate, a combination of lithium nitrate and lithium acetate, a combination of lithium hydroxide, lithium carbonate, and lithium nitrate, a combination of lithium carbonate, lithium nitrate, and lithium acetate, or a combination of lithium hydroxide, lithium carbonate, lithium nitrate, and lithium acetate.

In some embodiments, the additive includes any one of or a combination of at least two of strontium carbonate, aluminum oxide, zirconium hydroxide, lanthanum(III) oxide, zirconium dioxide, lithium nitrate, magnesium dioxide, niobium oxide, yttrium(III) oxide, aluminum phosphate, tungsten trioxide, lithium phosphate or lithium silicate. Typical but non-limiting combinations include a combination of strontium carbonate and aluminum oxide, a combination of aluminum oxide and zirconium hydroxide, a combination of zirconium hydroxide and lanthanum(III) oxide, a combination of lanthanum(III) oxide and zirconium dioxide, a combination of lithium nitrate, magnesium dioxide and niobium oxide, a combination of niobium oxide, yttrium(III) oxide and aluminum phosphate, a combination of aluminum phosphate, tungsten trioxide and lithium phosphate, a combination of tungsten trioxide, lithium phosphate and lithium silicate, a combination of strontium carbonate, aluminum oxide, zirconium hydroxide and lanthanum(III) oxide, a combination of lanthanum(III) oxide, zirconium dioxide, lithium nitrate, magnesium dioxide and niobium oxide, a combination of lithium nitrate, magnesium dioxide, niobium oxide, yttrium(III) oxide and aluminum phosphate, or a combination of niobium oxide, yttrium(III) oxide, aluminum phosphate, tungsten trioxide, lithium phosphate and lithium silicate.

In some embodiments, the additive is added in an amount of 1000 ppm to 1500 ppm, for example, 1000 ppm, 1100 ppm, 1200 ppm, 1300 ppm, 1400 ppm, or 1500 ppm, which is not limited to the numerical values listed, and other numerical values not listed within the numerical range are applicable.

In some embodiments, the sintering is performed at a temperature of 750°C to 950°C, for example, 750°C, 780°C, 800°C, 820°C, or 850°C, which is not limited to the numerical values listed, and the numerical values not listed within the numerical range are applicable.

In some embodiments, the sintering is performed for 8 h to 18 h, for example, 8 h, 10 h, 14 h, 15 h, or 18 h, which is not limited to the numerical values listed, and other numerical values not listed within the numerical range are applicable.

In some embodiments, the method of preparing the lithium manganese iron phosphate material includes the following step.

A lithium manganese iron phosphate precursor, a lithium source and a carbon source are sanded and mixed in a liquid phase system, spray-dried, and sintered to provide the lithium manganese iron phosphate material.

In some embodiments, the liquid phase system is deionized water and/or ultrapure water.

In some embodiments, the carbon source is any one of or a combination of at least two of glucose, starch, sucrose, citric acid, lactic acid, succinic acid, ethanol, methanol or oil. Typical but non-limiting combinations include a combination of glucose and starch, a combination of starch and sucrose, a combination of sucrose and citric acid, a combination of citric acid and lactic acid, a combination of lactic acid and succinic acid, a combination of succinic acid and ethanol, a combination of ethanol, methanol and oil, a combination of glucose, starch, sucrose and citric acid, a combination of sucrose, citric acid, lactic acid and succinic acid, a combination of citric acid, lactic acid, succinic acid and ethanol, a combination of succinic acid, ethanol, methanol and oil, a combination of glucose, starch, sucrose, citric acid and lactic acid, a combination of sucrose, citric acid, lactic acid, succinic acid and ethanol, or a combination of lactic acid, succinic acid, ethanol, methanol and oil.

In some embodiments, the sintering is performed at a temperature of 500°C to 800°C, for example, 500°C, 550°C, 600°C, 700°C, or 800°C, which is not limited to the numerical values listed, and other numerical values not listed within the numerical range are applicable.

In some embodiments, the sintering is performed for 10 h to 20 h, for example, 10 h, 12 h, 15 h, 18 h or 20 h, which is not limited to the listed numerical values, and other numerical values not listed within the numerical range are applicable.

In some embodiments, the sintering is carried out under an inert atmosphere.

As a preferred solution of the preparation method according to the first aspect of the present disclosure, the preparation method includes the following step.

The phosphoryl chloride trimer in an amount of 0.7 to 1.0 wt%, the ternary material, and the lithium manganese iron phosphate material are mixed, where the mass ratio of the ternary material to the lithium manganese iron phosphate is (1.5 to 4.5): (8.5 to 5.5). The resulting mixture is subjected to the high-energy ball milling at a ball-to-material ratio of (8 to 12): 1 for 1 h to 2 h, with the revolution speed of 800 r/min to 1200 r/min and the rotation speed of 2200 r/min to 2500 r/min, to obtain the ternary blended positive electrode material.

The ternary material is prepared by the following process.

The additive in an amount of 1000 ppm to 1500 ppm, the nickel cobalt manganese hydroxide precursor, and the lithium source are mixed and sintered at 750°C to 950°C for 8 to 18 h to obtain the ternary material.

The median particle size of the ternary material is from 8 µm to 20 µm, and the particle size distribution of the ternary material is from 0.6 to 1.2. The ternary material includes any one of or a combination of at least two of NCM523, NCM622, NCM712, NCM811, or NCM90505.

The lithium manganese iron phosphate material is prepared by the following process.

The lithium manganese iron phosphate precursor, the lithium source and the carbon source are sanded and mixed in the liquid phase system, spray-dried, and then sintered at 500°C to 800°C for 10 h to 20 h to obtain the lithium manganese iron phosphate material.

The median particle size of the lithium manganese iron phosphate material is 1 µm to 2 µm, and the particle size distribution of the lithium manganese iron phosphate material is 0.2 to 0.4.

In a second aspect, embodiments of the present disclosure provide a ternary blended positive electrode material obtained from the preparation method of the first aspect according to the present disclosure.

In a third aspect, embodiments of the present disclosure provide a battery including the ternary blended positive electrode material of the second aspect according to the present disclosure.

Compared to the related art, the present disclosure has at least the following advantages.

(1) According to the present disclosure, the ternary material and the lithium manganese iron phosphate material are uniformly mixed together by high-energy ball milling, so that the ball-milled particles have a finer particle size and the mixing is more uniform due to high ball milling efficiency, thereby improving the compactness of the ternary material and the lithium manganese iron phosphate material, and increasing the electrical conductivity of the material. Meanwhile, by using the polyphosphazene intermediate as the coating material, the obtained ternary blended positive electrode material has an ultra-thin coating layer that blocks the direct contact between the electrolyte and the positive electrode material during the circulation process, thereby providing stability.

(2) The preparation method according to the present disclosure is simple and easy to industrialize, and the ternary blended lithium manganese iron phosphate positive electrode material coated with the PNCL super-thin layer can be obtained by a single high-energy ball milling process.

Other aspects will become apparent upon reading and understanding the detailed description.

### DETAILED DESCRIPTION

### Example 1

The present example provides a method of preparing the ternary blended positive electrode material, and the method includes the following steps.

The NCM523 ternary material and the lithium manganese iron phosphate material in a mass ratio of 3: 7 and the phosphoryl chloride trimer in an amount of 0.85 wt% were mixed. The resulting mixture was subjected to a high-energy ball milling for 1 h at a ball-to-material ratio of 10: 1, with a revolution speed of 1000 r/min and a rotation speed of 2300 r/min to obtain the ternary blended positive electrode material.

The NCM523 ternary material is prepared by the following process.

The nickel cobalt manganese hydroxide precursor (with a molar ratio of Ni: Co: Mn=5: 2: 3), the strontium carbonate (in an amount of 1200 ppm) and the lithium carbonate were sintered at a temperature of 900°C for 12 h to obtain the ternary material with a median particle size of 12 µm and a particle size distribution of 0.8.

The lithium manganese iron phosphate material is prepared by the following process.

The lithium manganese iron phosphate precursor, the lithium carbonate and the citric acid were sanded and mixed in a liquid phase system, spray-dried at 220°C, sintered at 750°C under nitrogen for 10 h, and then subjected to air flow pulverization and sieving to obtain the lithium manganese iron phosphate material with the median particle size of 1.5 µm and the particle size distribution of 0.3.

### Example 2

The present example provides a method of preparing the ternary blended positive electrode material, and the method includes the following steps.

The phosphoryl chloride trimer in an amount of 0.7 wt%, the NCM523 ternary material, and the lithium manganese iron phosphate material were mixed. The resulting mixture was subjected to a high-energy ball milling at a ball-to-material ratio of 8: 1 for 2 h, with a revolution speed of 800 r/min and a rotation speed of 2200 r/min to obtain the ternary blended positive electrode material.

The ternary material is prepared by the following process.

The nickel cobalt manganese hydroxide precursor (with a molar ratio of Ni: Co: Mn=5: 2: 3), the lanthanum(III) oxide in an amount of 1000 ppm and the lithium hydroxide were sintered at 750°C for 10 h and subjected to mechanical pulverization and sieving to obtain the ternary material with a median particle size of 8 µm and a particle size distribution of 1.2.

The lithium manganese iron phosphate material is prepared by the following process.

The lithium manganese iron phosphate precursor, the lithium hydroxide and starch were sanded and mixed in liquid phase system, spray-dried at 200°C, sintered at 500°C for 20 h, and then subjected to air flow pulverization and sieving to obtain the lithium manganese iron phosphate material with a median particle size of 1 µm and a particle size distribution of 0.4.

### Example 3

The present example provides a method of preparing the ternary blended positive electrode material, and the method includes the following steps.

The NCM523 ternary material, the lithium manganese iron phosphate material, and the phosphoryl chloride trimer in an amount of 1.0 wt% were mixed. The resulting mixture was subjected to a high-energy ball milling for l h at a ball-to-material ratio of 12: 1, with a revolution speed of 1200 r/min and a rotation speed of 2500 r/min to obtain the ternary blended positive electrode material.

The ternary material is prepared by the following process.

The nickel cobalt manganese hydroxide precursor (with a molar ratio of Ni: Co: Mn=5: 2: 3), the aluminum phosphate in an amount of 1500 ppm and the lithium nitrate were sintered at 950°C for 8 h and subjected to mechanical pulverization and sieving to obtain the ternary material with a median particle size of 20 µm and a particle size distribution of 0.6.

The lithium manganese iron phosphate material is prepared by the following process.

The lithium manganese iron phosphate precursor, the lithium nitrate and the lactic acid were sanded and mixed in the liquid phase system, spray-dried, and sintered at 800°C for 10 h, to obtain the lithium manganese iron phosphate material with a median particle size of 2 µm and a particle size distribution of 0.2.

### Example 4

This example provides a method of preparing the ternary blended positive electrode material, which differs from the method of Example 1 in that the NCM523 ternary material is replaced with NCM811.

The NCM811 ternary material is prepared by the following process.

The nickel cobalt manganese hydroxide precursor (with a molar ratio of Ni: Co: Mn=8: 1: 1), the lithium carbonate and the strontium carbonate were sintered at 900°C for 12 h to obtain the ternary material with a median particle size of 12 µm and a particle size distribution of 0.8.

### Example 5

This example provides a method of preparing the ternary blended positive electrode material, which differs from the method of Example 1 in that the NCM90505 ternary material is replaced with NCM811.

The NCM90505 ternary material is prepared by the following process.

The nickel cobalt manganese hydroxide precursor (with a molar ratio of Ni: Co: Mn=9: 0.5: 0.5), the lithium carbonate and the strontium carbonate were mixed and sintered at 900°C for 12 h to obtain the ternary material with a median particle size of 12 µm and a particle size distribution of 0.8.

### Example 6

This example provides a method of preparing the ternary blended positive electrode material, which differs from the method of Example 1 in that the phosphoryl chloride trimer was added in an amount of 0.5 wt%.

### Example 7

This example provides a method of preparing the ternary blended positive electrode material, which differs from the method of Example 1 in that the phosphoryl chloride trimer was added in an amount of 1.2 wt%.

### Example 8

This example provides a method of preparing the ternary blended positive electrode material, which differs from the method of Example 1 in that the mass ratio of the NCM523 ternary material to the lithium manganese iron phosphate material is 5: 5.

### Example 9

This example provides a method of preparing the ternary blended positive electrode material, which differs from the method of Example 1 in that the mass ratio of NCM523 ternary material to the lithium manganese iron phosphate material is 1: 9.

### Comparative Example 1

This comparative example provides a method of preparing theternary blended positive electrode material, which differs from the method of Example 1 in that the high-energy ball milling is replaced with a mechanical fusion.

### Comparative Example 2

The present comparative example provides a method of preparing the ternary blended positive electrode material, which differs from the method of Example 1 in that the high-energy ball milling is replaced with dispersing and mixing by a disperser.

The ternary blended positive electrode material obtained above, a binder, a conductive agent and a dispersing agent in a mass ratio of 97.5: 0.3: 2: 0.2 were mixed and stirred uniformly to obtain a positive electrode slurry. The resulting positive electrode slurry was applied to a 12 µm aluminum foil by a coating process and carried out drying and cold pressing process to obtain a positive sheet. Graphite, a conductive carbon black SP, and carboxymethyl cellulose (CMC) in a ratio of 97: 0.7: 1.25: 1.05 were mixed and stirred uniformly to obtain a negative electrode slurry. The resulting negative electrode slurry was applied to 8 µm copper foil to obtain a negative sheet. A polypropylene (PP) membrane was used as the separator. Ethylene carbonate (EC), diethyl carbonate (DEC), and ethyl methyl carbonate (EMC) in a ratio of 4: 3: 3 were mixed to use as the electrolyte. Vinylene carbonate (VC), propylene sulfite (PS), fluoroethylene carbonate (FEC), and cyclohexylbenzene (CHB) in a ratio of 3: 2: 1: 1 were mixed to use as the additive, and a mass percentage the additive is 10% of the total mass. The concentration of lithium hexafluorophosphate in the electrolyte is 1 mol/L. The positive electrode sheet, the negative electrode sheet, and the separator were wound or stacked together to obtain a bare battery cell. The bare battery cell was placed in an aluminum laminated film for assembly into a 2 Ah pouch battery cell. After electrolyte injection, the cell was subjected to aging, formation, degassing, and final sealing to produce a lithium-ion pouch battery, which is then carried out electrochemical testing.

The testing was performed under 2.5 V to 4.2 V in 1 C/1 C cycles at 25°C.

The testing results were shown in Table 1.

| No. | Powder resistivity | Capacity retention after 300 cycles |
|---|---|---|
| Example 1 | 85 Ω·cm | 96.5% |
| Example 2 | 80 Ω·cm | 97.1% |
| Example 3 | 78 Ω·cm | 96.8% |
| Example 4 | 82 Ω·cm | 96.1% |
| Example 5 | 86 Ω·cm | 95.4% |
| Example 6 | 135 Ω·cm | 92.5% |
| Example 7 | 164 Ω·cm | 91.8% |
| Example 8 | 123 Ω·cm | 90.2% |
| Example 9 | 113 Ω·cm | 94.1% |
| Comparative Example 1 | 190 Ω·cm | 91.5% |
| Comparative Example 2 | 178 Ω·cm | 92.3% |

From Table 1 the following conclusions can be drawn.
(1) As can be seen from Examples 1 to 5 according to the present disclosure, the ternary material and the lithium manganese iron phosphate material are uniformly mixed together by high-energy ball milling. Because of the high ball milling efficiency, the ball-milled particles have a finer particle size, and the mixing is more uniform, so that the compactness of the ternary material and the lithium manganese iron phosphate material is improved, and the electrical conductivity of the material is improved. Meanwhile, by using the polyphosphazene intermediate as the coating material, the obtained ternary blended positive electrode material has an ultra-thin coating layer that blocks the direct contact between the electrolyte and the positive electrode material during the circulation process, thereby providing stability.
(2) As can be seen from Examples 6 to 7 and Example 1, when the amount of the coating material added is not within the preferred range of the present disclosure, the electrochemical performance of the prepared ternary blended positive electrode material is deteriorated.
(3) As can be seen from Examples 8 and 9 and Example 1, when the mass ratio of the ternary material to the lithium manganese iron phosphate material is within the preferred range provided herein, it is possible to obtain a ternary blended positive electrode material having a tight and uniform structure. When the proportion of the ternary material in the blending is too large, since the structural stability of the ternary material is poor, the cycling performance of the obtained ternary blended material is deteriorated. When the ratio of the ternary material in the blending is too small, there is a large amount of lithium manganese iron phosphate which cannot be used to contact the ternary material well, and the lithium manganese iron phosphate itself has poor conductivity, so that the electrical properties of the obtained ternary blended material are deteriorated.
(4) As can be seen from Comparative Examples 1 and 2 and Example 1, the high-energy ball milling provided in the present disclosure improves the compactness of the ternary material and the lithium manganese iron phosphate material compared to the conventional mixing in the related art, which improves the electrical conductivity of the material, and facilitates the uniform packing of the phosphoryl chloride trimer.

In summary, according to the present disclosure, the ternary material and the lithium manganese iron phosphate material are uniformly mixed together by high-energy ball milling, so that the ball-milled particles have a finer particle size and the mixing is more uniform due to high ball milling efficiency, thereby improving the compactness of the ternary material and the lithium manganese iron phosphate material, and improving the electrical conductivity of the material. Meanwhile, by using the polyphosphazene intermediate as the coating material, the obtained ternary blended positive electrode material has an ultra-thin coating layer that blocks the direct contact between the electrolyte and the positive electrode material during the circulation process, thereby providing stability.

## Claims

1. A method of preparing a ternary blended positive electrode material, the method comprising mixing a ternary material, a lithium manganese iron phosphate material, and a coating material, and performing high-energy ball milling on the obtained mixture to obtain the ternary blended positive electrode material,
wherein the coating material comprises a polyphosphazene intermediate.

2. The method according to claim 1, wherein the ternary material has a median particle size of 8 µm to 20 µm;
optionally, the ternary material has a particle size distribution of 0.6 to 1.2;
optionally, the ternary material comprises any one of or a combination of at least two of NCM523, NCM622, NCM712, NCM811 or NCM90505;
optionally, the lithium manganese iron phosphate material has a median particle size of 1 µm to 2 µm;
optionally, the lithium manganese iron phosphate material has a particle size distribution of 0.2 to 0.4; and
optionally, the polyphosphazene intermediate comprises a phosphoryl chloride trimer.

3. The method according to claim 1 or 2, wherein a mass ratio of the ternary material to the lithium manganese iron phosphate material is (1.5 to 4.5): (8.5 to 5.5); and
optionally, a mass fraction of the coating material is 0.7 wt% to 1.0 wt% of a total mass of the ternary material and the lithium manganese iron phosphate material.

4. The method according to any one of claims 1 to 3, wherein the high-energy ball milling is performed for 1 h to 2 h;
optionally, the high energy ball milling is performed at a ball-to-material ratio of (8 to 12): 1;
optionally, the high-energy ball milling is performed at a revolution speed of 800 r/min to 1200 r/min; and
optionally, the high-energy ball milling is performed at a rotation speed of 2200 r/min to 2500 r/min.

5. The method according to any one of claims 1 to 4, wherein the ternary material is prepared by mixing a nickel cobalt manganese hydroxide precursor, a lithium source and an additive, and performing sintering at a temperature;
optionally, a molar ratio of Ni: Co: Mn in the nickel cobalt manganese hydroxide precursor is 5: 2: 3 to 9.5: 0.25: 0.25;
optionally, the lithium source comprises any one of or a combination of at least two of lithium hydroxide, lithium carbonate, lithium nitrate, or lithium acetate;
optionally, the additive comprises any one of or a combination of at least two of strontium carbonate, aluminum oxide, zirconium hydroxide, lanthanum(III) oxide, zirconium dioxide, lithium nitrate, magnesium dioxide, niobium oxide, yttrium(III) oxide, aluminum phosphate, tungsten trioxide, lithium phosphate, or lithium silicate;
optionally, the additive is added in an amount of 1000 ppm to 1500 ppm;
optionally, the sintering is performed at 750°C to 950°C; and
optionally, the sintering is performed for 8 h to 18 h.

6. The method according to any one of claims 1 to 5, wherein the lithium manganese iron phosphate material is prepared by sanding and mixing a lithium manganese iron phosphate precursor, a lithium source and a carbon source in a liquid phase system, and then performing spray drying and sintering.

7. The method according to claim 6, wherein the carbon source comprises any one of or a combination of at least two of glucose, starch, sucrose, citric acid, lactic acid, succinic acid, ethanol, methanol or oil,
optionally, the sintering is performed at 500°C to 800°C;
optionally, the sintering is performed for 10 h to 20 h; and
optionally, the sintering is performed under an inert atmosphere.

8. The method according to any one of claims 1 to 7, wherein the method comprises mixing the phosphoryl chloride trimer in an amount of 0.7 wt% to 1.0 wt%, the ternary material, and the lithium manganese iron phosphate material, and performing the high-energy ball milling on the obtained mixture for 1 h to 2 h at the ball-to-material ratio of (8-12): 1 with the revolution speed of 800 r/min to 1200 r/min and a rotation speed of 2200 r/min to 2500 r/min, wherein the mass ratio of the ternary material to the lithium manganese iron phosphate is (1.5 to 4.5): (8.5 to 5.5);
the ternary material is prepared by mixing the additive in an amount of 1000 ppm to 1500 ppm, the lithium source and the nickel cobalt manganese hydroxide precursor, and performing sintering at 750°C to 950°C for 8 h to 18 h; wherein the median particle size of the ternary material is from 8 µm to 20 µm, and the particle size distribution of the ternary material is from 0.6 to 1.2; and the ternary material comprises any one of or a combination of at least two of NCM523, NCM622, NCM712, NCM811, or NCM90505; and
the lithium manganese iron phosphate material is prepared by sanding and mixing the lithium manganese iron phosphate precursor, the another lithium source and the carbon source in the liquid phase system, and performing spray drying and sintering at 500°C to 800°C for 10 h to 20 h; wherein the median particle size of the lithium manganese iron phosphate material is 1 µm to 2 µm,, and the particle size distribution of the lithium manganese iron phosphate material is 0.2 to 0.4.

9. A ternary blended positive electrode material obtained by the method according to any one of claims 1 to 8.
